# EUROPEAN PATENT SPECIFICATION

(11) **EP 3 798 963 B1**
(45) Date of publication and mention of the grant of the patent: **17.12.2025**
(21) Application number: 20192055.0
(22) Date of filing: 21.08.2020
(51) Int. Cl.: G06Q 30/06

(54) **IN-STORE CUSTOMER TRACKING SYSTEM AND METHOD**
SYSTEM UND VERFAHREN ZUR KUNDENVERFOLGUNG IN EINEM GESCHÄFT
PROCÉDÉ ET SYSTÈME DE SUIVI DE CLIENTS EN MAGASIN

(30) Priority: 30.09.2019 JP 2019179936
(43) Date of publication of application: 31.03.2021
(73) Proprietor: Toshiba TEC Kabushiki Kaisha, Tokyo 141-8562 (JP)
(72) Inventor: SAITOU, Takahiro, Shinagawa-ku, Tokyo 141-8562 (JP)
(74) Representative: Bandpay & Greuter

(56) References cited:
- WO-A1-2018/013046
- US-A1- 2015 029 339
- US-A1- 2016 019 514
- US-A1- 2018 374 100
- US-A1- 2020 126 146
- US-A1- 2020 234 265

## Description

### FIELD

Embodiments described herein relate to an in-store customer tracking system and a tracking method.

### BACKGROUND

It is desirable that customers in a store can be properly monitored and managed even in an unmanned store. In this context, an unmanned store refers to a retail store, or the like, designed to be operated with few, if any, sales clerks or staff.

US 2018/374100 A1 relates to tracking customers within an unmanned retail store.

### DESCRIPTION OF THE DRAWINGS

FIG. 1 is a diagram showing a schematic configuration of an in-store customer tracking system according to an embodiment.
FIG. 2 is a block diagram of a sales management device.
FIG. 3 is a schematic diagram showing a structure of a data record included in a member database.
FIG. 4 is a schematic diagram showing a structure of a data record included in a transaction management.
FIG. 5 is a schematic diagram showing a structure of a data record included in a purchased commodity database.
FIG. 6 is a block diagram of a check-in device.
FIG. 7 is a block diagram of an action monitoring device.
FIG. 8 is a flowchart of an action monitoring process performed by a processor.
FIG. 9 is a flowchart of a sales management process performed by a processor.
FIG. 10 is a flowchart of a check-in process performed by a processor.

### DETAILED DESCRIPTION

According to the present invention, there is provided an in-store customer tracking system includes a sensor system including one or more cameras in a store, a check-in device including a code reader at an entrance of the store, and a processing system. The processing system is configured to assign a customer tracking code to a customer and generate a transaction data record in association with the assigned customer tracking code after the sensor system detects the customer entering the store via the entrance. The processing system is configured to, upon the code reader reading a customer code while the sensor system detects the customer using the code reader, update the transaction data record to be associated with the read customer code. The processing system is configured to, upon the sensor system detecting the customer leaving the store, delete the transaction data record.

Preferably, the processing system is further configured to cause the check-in device to perform a warning operation when the sensor system detects the customer has passed the entrance region without the assigned transaction data record for the customer being associated with a customer code.

Preferably, the check-in device includes a display.

Preferably, the warning operation includes displaying a warning message on the display.

Preferably, the check-in device includes a speaker.

Preferably, the warning operation includes generating a warning sound from the speaker the display.

Preferably, the check-in device is further configured to stop the warning operation if the code reader reads a customer code for the customer.

Preferably, the processing system is further configured to assign a transaction code and associate the transaction data record also with the assigned transaction code, upon the sensor system detecting the customer entering the entrance region.

Preferably, the processing system is further configured to generate a purchase product data record in association with the transaction code and a product code, upon the sensor system detecting the customer taking a product identified by the product code.

Preferably, the processing system is further configured to maintain a customer data record including payment information in association with the customer code.

Preferably, the processing system is further configured to, upon the sensor system detecting the customer leaving the store, obtain the payment information from the customer data record using the transaction code included in the transaction data record, and process payment for the product identified by the product code in the purchase product data record using the payment information.

Preferably, the processing system is further configured to delete the purchase product data record upon completing processing of the payment.

Preferably, the processing system is further configured to generate electronic receipt data for the payment upon completing processing of the payment.

The present invention further relates to a method for tracking a customer, the method comprising the following steps: detecting a customer entering an entrance region of a store with a sensor system; upon detecting the customer entering the entrance region, assigning a customer tracking code and generating a transaction data record in association with the assigned customer tracking code; detecting the customer using a code reader of a check-in device in the entrance region with the sensor system; updating the transaction data record to be associated with the read customer code; and deleting the transaction data record after the sensor system detects the customer has left the store.

The method may further comprise causing the check-in device to perform a warning operation when the sensor system detects the customer passes the entrance region without the transaction data record being associated with a customer code.

Preferably, the warning operation includes displaying a warning message on a display of the check-in device.

Preferably, the warning operation includes generating a warning sound from a speaker of the check-in device.

The method may further comprise a step of stopping the warning operation if the code reader reads a customer code of the customer.

The method may further comprise a step of assigning a transaction code and associating the transaction data record also with the assigned transaction code upon the sensor system detecting the customer entering the entrance region.

The method may further comprise a step of generating a purchase product data record in association with the transaction code and a product code if the sensor system detects the customer taking a product identified by the product code.

The method may further comprise a step of maintaining a customer data record including payment information in association with the customer code.

The method may further comprise a step of, upon the sensor system detecting the customer leaving the store, obtaining the payment information from the customer data record using the transaction code included in the transaction data record, and processing payment for the product identified by the product code in the purchase product data record using the payment information.

The method may further comprise a step of deleting the purchase product data record upon completing processing of the payment.

The method may further comprise a step of generating electronic receipt data for the payment upon completing processing of the payment.

Hereinafter, an example of an embodiment will be described with reference to the drawings.

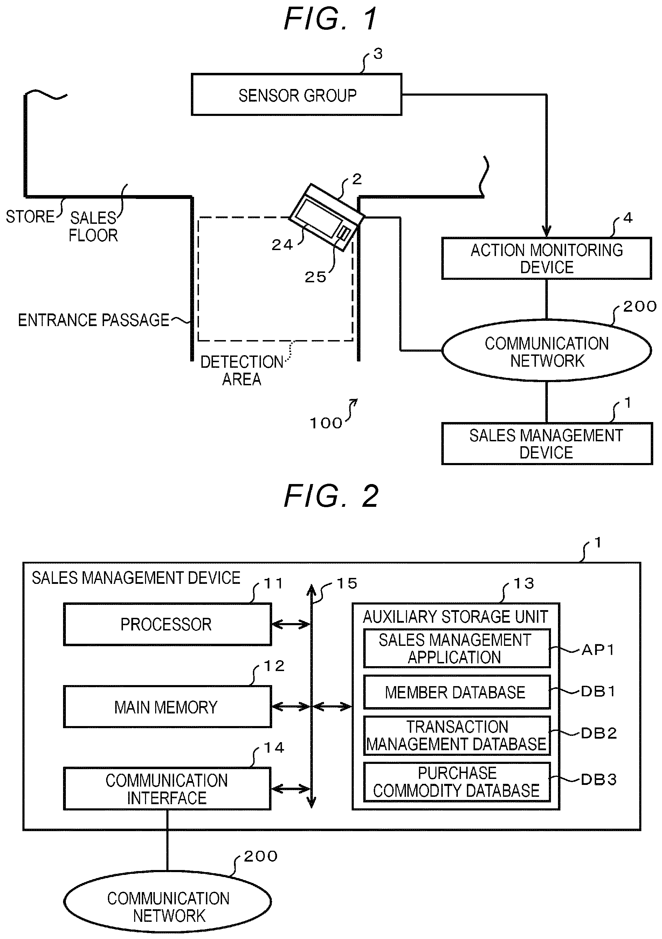

FIG. 1 is a block diagram showing a schematic configuration of a store management system 100 (may be referred to as an in-store customer tracking system)t.

The store management system 100 performs information processing for commodity sales in a store that sells commodities displayed on, for example, commodity shelves, displace cases, display stands, and the like in a sales floor. The store management system 100 is configured such that a sales management device 1, a check-in device 2, a sensor group 3, and an action monitoring device 4 can communicate with each other through a communication network 200.

As the communication network 200, the Internet, a virtual private network (VPN), a local area network (LAN), a public communication network, a mobile communication network, and the like are used independently or appropriately in combination.

The sales management device 1 performs a sales management process related to the purchase of a commodity by a customer on the basis of monitoring results obtained by the action monitoring device 4. The sales management process includes a registration process and an account process. The registration process is a process of registering a commodity to be purchased by a customer as a purchased commodity. The account process is a process for calculating the price of a purchased commodity and causing a customer to settle the price.

The check-in device 2 performs a check-in process for a customer to enter a store.

The sensor group 3 includes a large number of sensors disposed inside a store. Each of the sensors detects a customer's actions and/or a display state of commodities. The sensors include, for example, one or more cameras, one or more optical sensors, one or more infrared sensors, one or more temperature sensors, or one or more weight sensors.

The action monitoring device 4 monitors a customer's action and a display state of commodities on the basis of detection results obtained by the sensor group 3. The sensor group 3 may be referred to as a sensor system.

FIG. 2 is a block diagram showing a main circuit configuration of the sales management device 1.

The sales management device 1 includes a processor 11, a main memory 12, an auxiliary storage unit 13, a communication interface 14, a transmission line 15, and the like. The processor 11, the main memory 12, the auxiliary storage unit 13, and the communication interface 14 are connected to each other through the transmission line 15. In addition, the processor 11, the main memory 12, and the auxiliary storage unit 13 are connected to each other through the transmission line 15, thereby configuring a computer that performs information processing for controlling the sales management device 1.

The processor 11 is equivalent to a central portion of the computer. The processor 11 performs information processing for performing various functions as the sales management device 1 in accordance with an information processing program.

The main memory 12 is equivalent to a main storage portion of the computer. The main memory 12 includes a non-volatile memory region and a volatile memory region. The main memory 12 stores an information processing program in the non-volatile memory region. In addition, the main memory 12 may store data required in executing information processing by the processor 11 in the non-volatile or volatile memory region. The main memory 12 uses the volatile memory region as a work area in which data is appropriately rewritten by the processor 11.

The auxiliary storage unit 13 is equivalent to an auxiliary storage portion of the computer. As the auxiliary storage unit 13, for example, a well-known storage device such as an electric erasable programmable read-only memory (EEPROM), a hard disc drive (HDD), or a solid state drive (SSD) may be used as a single device or a combination of a plurality of devices. The auxiliary storage unit 13 stores data used for the processor 11 to perform various processes, and data generated through a process performed by the processor 11. The auxiliary storage unit 13 stores information processing programs. One of the information processing programs stored in the auxiliary storage unit 13 is an application program (hereinafter, referred to as a sales management application) AP1 for performing a function as the sales management device 1. The auxiliary storage unit 13 stores a member database DB1, a transaction management database DB2, and a purchased commodity database DB3.

The member database DB1 is a database for managing customers who are registered as members for making a purchase in a store managed by the store management system 100.

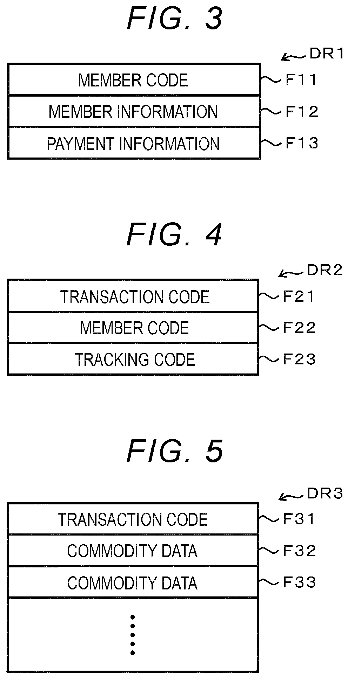

FIG. 3 is a schematic diagram showing a structure of a data record DR1 included in the member database DB1.

The member database DB1 is a set of the data records DR1 having a structure shown in FIG. 3. Each of the data records DR1 included in the member database DB1 is associated with a customer. In addition, one data record DR1 includes fields F11, F12, and F13. In the field F11, a member code (or customer code) provided at the time of member registration in order to discriminate the associated customer from other customers is set. In the field F12, member information representing properties of the associated customer, and the like is set. What kind of information is included in the member information is optional. Information included in the member information includes, for example, a name, an age, a sex, an address, a phone number, and the like. In the field F13, payment information regarding the payment of a price by the associated customer is set. A payment condition is, for example, a credit card number. The data record DR1 may be referred to as a customer data record.

The transaction management database DB2 is a database for managing a transaction with a customer who is in a store.

FIG. 4 is a schematic diagram showing a structure of a data record DR2 included in the transaction management database DB2.

The transaction management database DB2 is a set of the data records DR2 having a structure shown in FIG. 4. Each of the data records DR2 included in the transaction management database DB2 is associated with a transaction with a customer who is in a store. In addition, one data record DR2 includes fields F21, F22, and F23. In the field F21, a transaction code for discriminating the associated transaction from other transactions is set. In the field F22, a member code of a customer who is a counterpart of the associated transaction is set. In the field F23, a tracking code (or customer tracking code) assigned by the action monitoring device 4 in order to track a customer who is a counterpart of the associated transaction is set. The data record DR2 may be referred to as a transaction data record.

The purchased commodity database DB3 is a database for managing a purchased commodity which is a target for a transaction with a customer who is in a store.

FIG. 5 is a schematic diagram showing a structure of a data record DR3 included in the purchased commodity database DB3.

The purchased commodity database DB3 is a set of the data records DR3 having a structure shown in FIG. 5. Each of the data records DR3 included in the purchased commodity database DB3 is associated with a transaction with a customer who is in a store. In addition, one data record DR3 includes fields F31 and F32. The data record DR3 may also include fields F33, F34, .... In the field F31, a transaction code of the associated transaction is set. In the field F32, commodity data related to a commodity which is registered as a purchased commodity with respect to the associated transaction is set. The commodity data includes a commodity code (or product code), the number of commodities, and a cancellation flag. The commodity data may include other pieces of information such as a unit price and a commodity name. The commodity code is an identification code determined to discriminate a commodity for each stock keeping unit (SKU), and for example, a Japanese article number (JAN) code is used. The cancellation flag is flag data for specifying a commodity which is temporarily registered as a purchased commodity but cancelled thereafter. The data record DR3 may be referred to as a purchase product data record.

In the data record DR3, fields subsequent to the field F33 are included when two or more purchased commodities are registered with respect to the associated transaction. In addition, similarly to the field F32, commodity data is also set in the fields subsequent to the field F33. Thus, a list of purchased commodities with respect to the associated transaction is represented by the fields subsequent to the fields F32.

The communication interface 14 is an interface of data communication through the communication network 200. As the communication interface 14, for example, a well-known communication device for performing data communication through a LAN can be used.

The transmission line 15 includes an address bus, a data bus, a control signal line, and the like and transmits data received and transmitted between the units connected to each other and control signals.

As hardware of the sales management device 1, for example, a general-purpose network server or other computer devices can be used. Typically, the sales management device 1 will generally be transferred in a state in which the sales management application AP1 has been stored in the auxiliary storage unit 13 but the member database DB1, the transaction management database DB2, and the purchased commodity database DB3 have not yet been stored therein. However, in some examples, the sales management application AP1 may not yet be stored in the auxiliary storage unit 13 or a different version may been stored in the auxiliary storage unit 13 and require an update or the like. The sales management application AP1 may be individually transferred to an end user. In addition, the sales management device 1 may be configured by the sales management application AP1 written to or loaded in the auxiliary storage unit 13 in response to an operator's request or instruction. A transfer of the sales management application AP1 to an end user can be performed by having the sales management application AP1 recorded in a removable recording medium such as a magnetic disk, a magneto-optical disk, an optical disk, or a semiconductor memory or by communication through a network.

The member database DB1 is written in the auxiliary storage unit 13 by the processor 11 executing information processing for member registration. The member database DB1, or otherwise a member database managed by a member management server or the like, at the time of start-up of the sales management device 1 or the like may be acquired through the communication network 200 and written in the auxiliary storage unit 13. The member database DB1 need not be stored in the auxiliary storage unit 13, and the processor 11 may instead refer directly to the member database managed by the member management server.

The transaction management database DB2 and the purchased commodity database DB3 are configured in the auxiliary storage unit 13 by the processor 11 executing information processing based on the sales management application AP1. At least some of the sales management application AP1, the member database DB1, the transaction management database DB2, and the purchased commodity database DB3 may be stored in the main memory 12.

As shown in FIG. 1, the check-in device 2 is disposed at an entrance passage through which a customer entering a sales floor of a store passes so as to be operated by the customer. However, an installation location and installation mode of the check-in device 2 does not matter as long as the check-in device can be operated by a customer who attempts to enter a sales floor.

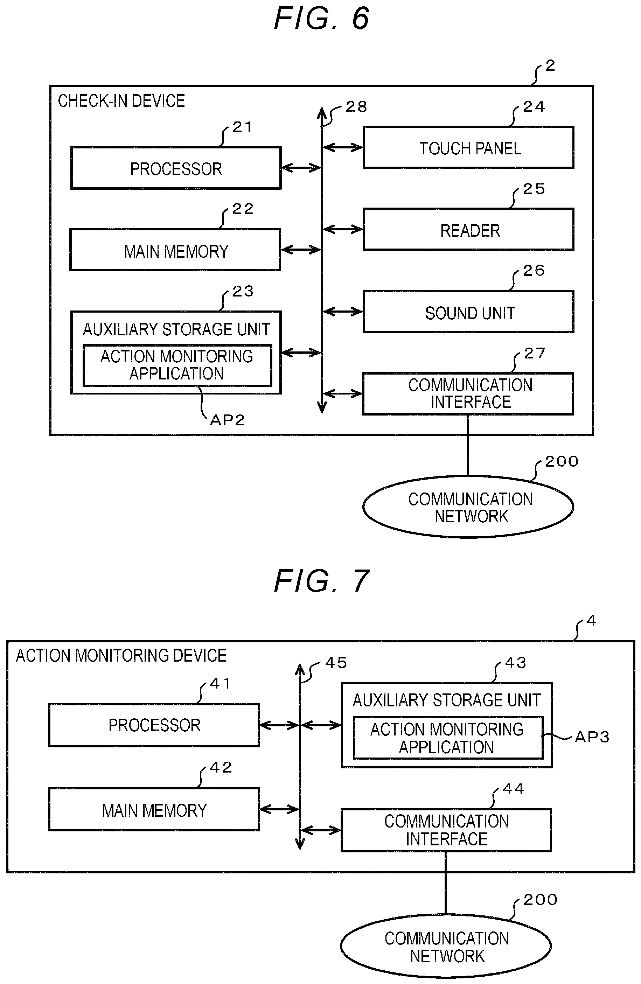

FIG. 6 is a block diagram showing a main circuit configuration of the check-in device 2.

The check-in device 2 includes a processor 21, a main memory 22, an auxiliary storage unit 23, a touch panel 24, a reader 25, a sound unit 26, a communication interface 27, and a transmission line 28. The processor 21, the main memory 22, the auxiliary storage unit 23, the touch panel 24, the reader 25, the sound unit 26, and the communication interface 27 are connected to each other through the transmission line 28. In addition, the processor 21, the main memory 22, and the auxiliary storage unit 23 are connected to each other through the transmission line 28, thereby configuring a computer that performs information processing for controlling the check-in device 2.

The processor 21 performs information processing for performing various functions as the check-in device 2 in accordance with an information processing program.

The main memory 22 includes a non-volatile memory region and a volatile memory region. The main memory 22 stores an information processing program in the non-volatile memory region. In addition, the main memory 22 may store data required in executing information processing by the processor 21 in the non-volatile or volatile memory region. The main memory 22 uses the volatile memory region as a work area in which data is appropriately rewritten by the processor 21.

As the auxiliary storage unit 23, for example, a well-known storage device such as an EEPROM, an HDD, or an SSD may be used as a single device or a combination of a plurality of devices. The auxiliary storage unit 23 stores data used for the processor 21 to perform various processes, and data generated through a process performed by the processor 21. The auxiliary storage unit 23 stores information processing programs. One of the information processing programs stored in the auxiliary storage unit 23 is an application program (hereinafter, referred to as a check-in application) AP2 for performing a function as the check-in device 2.

The touch panel 24 displays a screen for presenting various pieces of information to an operator. The touch panel 24 inputs data designated through the operator's touch operation. An operator of the check-in device 2 is a customer in most cases. However, a store clerk may be an operator.

The reader 25 reads a member code presented by a customer. As the reader 25, for example, a magnetic card reader is used. As the reader 25, an optical bar code reader or a wireless reader using proximity wireless communication may be used. The reader 25 is an example of an input device and may be referred to as a code reader.

The sound unit 26 outputs various sounds such as voice and melody.

The communication interface 27 is an interface of data communication through the communication network 200. As the communication interface 27, for example, a well-known communication device for performing data communication through a LAN can be used.

The transmission line 28 includes an address bus, a data bus, a control signal line, and the like and transmits data received and transmitted between the units connected to each other and control signals.

As hardware of the check-in device 2, for example, a general-purpose tablet computer or other general-purpose computer devices can be used. In addition, the transfer of the check-in device 2 is typically performed with the check-in application AP2 already stored in the auxiliary storage unit 23. However, the check-in application AP2 may instead be individually transferred or updated at a time of use rather than being pre-stored in the auxiliary storage unit 23. In addition, the check-in device 2 may be configured by an check-in application AP2 that is written to or loaded in the auxiliary storage unit 23 in response to an operator's request or instruction. A transfer of the check-in application AP2 can be performed by having the action check-in application AP2 recorded in a removable recording medium such as a magnetic disk, a magneto-optical disk, an optical disk, or a semiconductor memory or by communication through a network.

FIG. 7 is a block diagram showing a main circuit configuration of the action monitoring device 4.

The action monitoring device 4 includes a processor 41, a main memory 42, an auxiliary storage unit 43, a communication interface 44, a transmission line 45, and the like. The processor 41, the main memory 42, the auxiliary storage unit 43, and the communication interface 44 are connected to each other through the transmission line 45. In addition, the processor 41, the main memory 42, and the auxiliary storage unit 43 are connected to each other through the transmission line 45, thereby configuring a computer that performs information processing for controlling the action monitoring device 4.

The processor 41 performs information processing for performing various functions as the action monitoring device 4 in accordance with an information processing program. The processor 41 of the action monitoring device 4 and the processor 11 of the sales management device 1 may be collectively referred to as a processing system.

The main memory 42 includes a non-volatile memory region and a volatile memory region. The main memory 42 stores an information processing program in the non-volatile memory region. In addition, the main memory 42 may store data required in executing information processing by the processor 41 in the non-volatile or volatile memory region. The main memory 42 uses the volatile memory region as a work area in which data is appropriately rewritten by the processor 41.

As the auxiliary storage unit 43, for example, a well-known storage device such as an EEPROM, an HDD, or an SSD may be used as a single device or a combination of a plurality of devices. The auxiliary storage unit 43 stores data used for the processor 41 to perform various processes, and data generated through a process performed by the processor 41. The auxiliary storage unit 43 stores information processing programs. One of the information processing programs stored in the auxiliary storage unit 43 is an application program (hereinafter, referred to as an action monitoring application) AP3 for performing a function as the action monitoring device 4.

The communication interface 44 is an interface of data communication through the communication network 200. As the communication interface 44, for example, a well-known communication device for performing data communication through a LAN can be used.

The transmission line 45 includes an address bus, a data bus, a control signal line, and the like and transmits data received and transmitted between the units connected to each other and control signals.

As hardware of the action monitoring device 4, for example, a general-purpose network server or other computer devices can be used. In addition, the transfer of the action monitoring device 4 to an end user is typically performed with the action monitoring application AP3 already stored in the auxiliary storage unit 43. However, the action monitoring application AP3 may instead be individually transferred or updated at a time of use rather than being pre-stored in the auxiliary storage unit 43. In addition, the action monitoring device 4 may be configured by an action monitoring application AP3 that is written to or loaded in the auxiliary storage unit 43 in response to an operator's request or instruction. A transfer of the action monitoring application AP3 can be performed by having the action monitoring application AP3 recorded in a removable recording medium such as a magnetic disk, a magneto-optical disk, an optical disk, or a semiconductor memory or by communication through a network.

Next, an operation of the store management system 100 will be described. Contents of various information processing to be described below are examples, and a change in the order of some processes, omission of some processes, addition of another process, and the like can be appropriately performed.

A customer who makes a purchase in a store managed by the store management system 100 completes member registration in advance and acquires a member card in which a member code is recorded.

A customer causes the reader 25 of the check-in device 2 to read a member code recorded on a member card when the customer goes to a sales floor through the entrance passage shown in FIG. 1. In addition, the customer enters the sales floor and picks up a commodity desired to be purchased from the sales floor.

The processor 41 in the action monitoring device 4 executes information processing based on the action monitoring application AP3 (hereinafter, referred to as an action monitoring process).

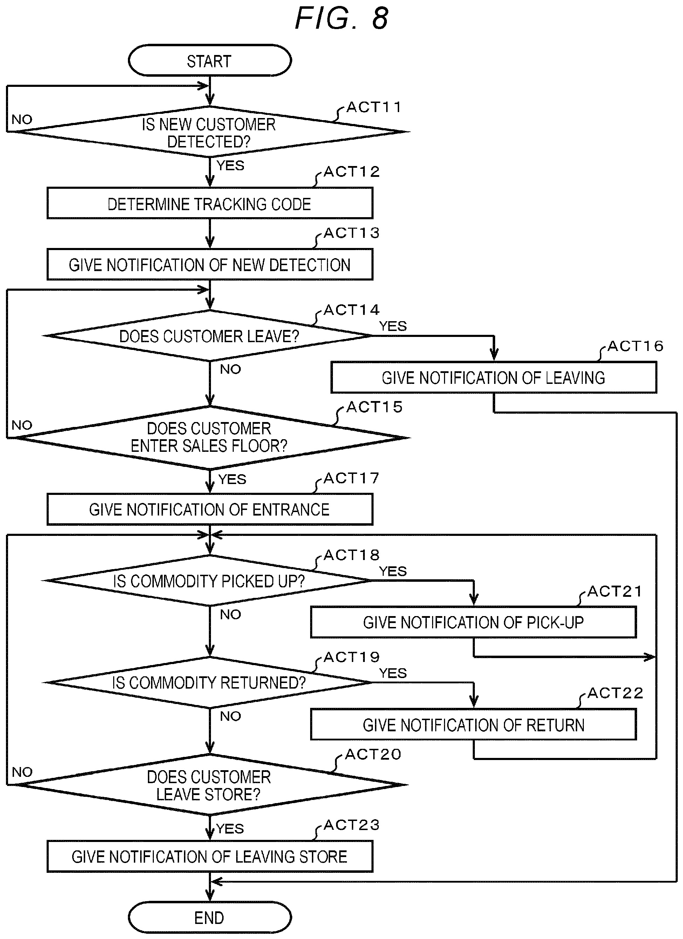

FIG. 8 is a flowchart of an action monitoring process performed by the processor 41.

As ACT11, the processor 41 waits for the detection of a new customer located in a detection area set in an entrance passage as shown in FIG. 1. The detection area may be referred to as an entrance region. The processor 41 monitors, for example, an output of the sensor group 3. When it can be determined that a state where there is no customer changes to a state where there is a customer with respect to the detection area, the processor 41 determines YES which indicates that a new customer is detected, and the process proceeds to ACT12.

As ACT12, the processor 41 determines a tracking code for discriminating the detected customer mentioned above from other customers being tracked in accordance with a rule determined in advance. The rule may be any rule as long as a tracking code to be newly determined is determined not to overlap tracking codes determined for other customers being tracked, and is determined by, for example, a generator of the action monitoring application AP3.

The tracking code is an example of first identification information for discriminating a customer who is a person entering a detection area as a region determined in advance. That is, the processor 41 executes information processing based on the action monitoring application AP3, so that a computer having the processor 41 as a central portion functions as determination means for determining a tracking code as the first identification information.

As ACT13, the processor 41 notifies the sales management device 1 that a customer is newly detected. The processor 41 transmits, for example, notification data including a notification code indicating new detection and the tracking code determined in ACT12 from the communication interface 44 to the sales management device 1 through the communication network 200.

On the other hand, the processor 11 in the sales management device 1 executes information processing based on the sales management application AP1 (hereinafter, referred to as a sales management process).

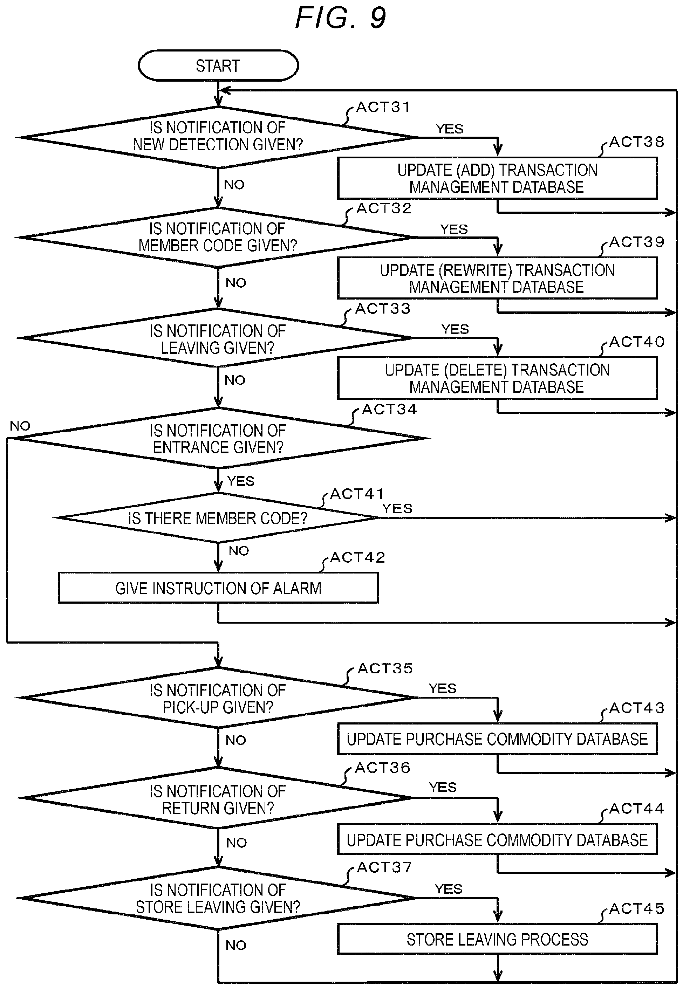

FIG. 9 is a flowchart of a sales management process performed by the processor 11.

As ACT31, the processor 11 determines whether or not a notification of new detection is received. In addition, when the notification is not received, the processor 11 determines NO and the process proceeds to ACT32.

As ACT32, the processor 11 determines whether or not a notification of a member code is received. In addition, when the notification is not received, the processor 11 determines NO and the process proceeds to ACT33.

As ACT33, the processor 11 determines whether or not a notification of leaving is received. In addition, when the notification is not received, the processor 11 determines NO and the process proceeds to ACT34.

As ACT34, the processor 11 determines whether or not a notification of entrance is received. In addition, when the notification is not received, the processor 11 determines NO and the process proceeds to ACT35.

As ACT35, the processor 11 determines whether or not a notification of pick-up is received. In addition, when the notification is not received, the processor 11 determines NO and the process proceeds to ACT36.

As ACT36, the processor 11 determines whether or not a notification of return is received. In addition, when the notification is not received, the processor 11 determines NO and the process proceeds to ACT37.

As ACT37, the processor 11 determines whether or not a notification of leaving from a store is received. In addition, when the notification is not received, the processor 11 determines NO and the process returns to ACT31.

Thus, the processor 11 waits for a notification of any one of new detection, a member code, leaving, entrance, pick-up, return, and leaving from a store as ACT31 to ACT37.

As described above, when notification data transmitted from the action monitoring device 4 in order to provide a notification of new detection of a customer is transmitted to the sales management device 1 through the communication network 200 and received by the communication interface 14, the processor 11 determines YES in ACT31 and the process proceeds to ACT38.

As ACT38, the processor 11 updates the transaction management database DB2 so as to add a new data record DR2 for managing a transaction with a customer detected this time. The processor 11 sets a transaction code, which is different from the transaction code set in the field F21 of the data record DR2 already included in the transaction management database DB2, in a field F21 of the data record DR2 added here. In addition, the processor 11 sets invalid data determined in advance in a field F22 of the data record DR2 added here as data indicating that a member code is not yet acquired. In addition, the processor 11 sets a tracking code, which is included in the notification data for giving a notification of new detection of a customer, in a field F23 of the data record DR2 added here. Thereafter, the processor 11 returns to a waiting state of ACT31 to ACT37.

On the other hand, the processor 21 in the check-in device 2 executes information processing based on the check-in application AP2 (hereinafter, referred to as a check-in process).

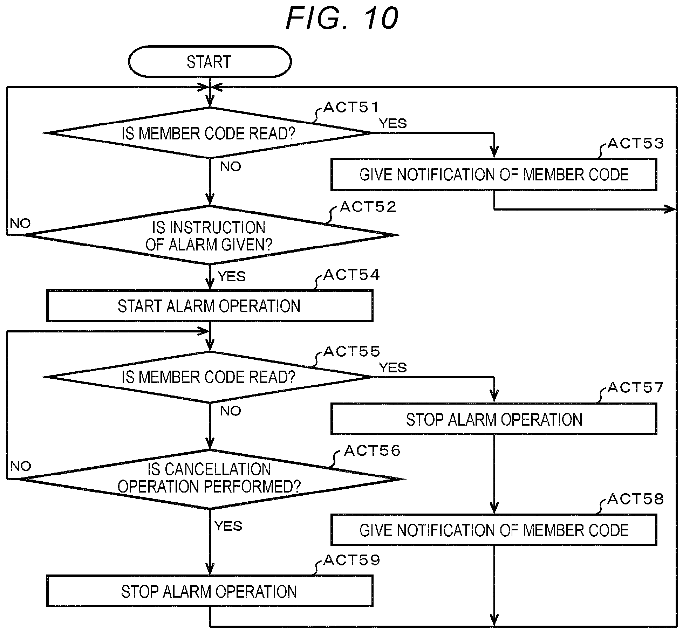

FIG. 10 is a flowchart of a check-in process performed by the processor 21.

As ACT51, the processor 21 checks whether or not a member code has been read by the reader 25. In addition, when a member code has not been read, the processor 21 determines NO and the process proceeds to ACT52.

As ACT52, the processor 21 checks whether or not the sales management device 1 instructs an alarm. In addition, when an alarm has not been instructed, the processor 21 determines NO and the process returns to ACT51.

Thus, the processor 21 waits for the reading of a member code or the instruction of an alarm as the ACT51 and ACT52.

If a member code recorded on a member card is read by the reader 25 of the check-in device 2 when a customer goes to a sales floor through an entrance passage as described above, the processor 21 determines YES in ACT51 and the process proceeds to ACT53.

As ACT53, the processor 21 notifies the sales management device 1 of the member code. The processor 21 transmits, for example, notification data including a notification code indicating a notification of the member code and the member code read by the reader 25 from the communication interface 27 to the sales management device 1 through the communication network 200. Thereafter, the processor 21 returns to a waiting state of ACT51 and ACT52.

When this notification data is transmitted to the sales management device 1 through the communication network 200 and received by the communication interface 14, the processor 11 determines YES in ACT32 in FIG. 9 and the process proceeds to ACT39.

As ACT39, the processor 11 updates the transaction management database DB2. The processor 11 rewrites a data record DR2 which is added to the transaction management database DB2 as described above and in which invalid data is set in a field F22 thereof such that the member code included in the notification data is set in the field F22. Thereby, a tracking code determined by the action monitoring device 4 with respect to a customer located in a detection area and a member code read by the check-in device 2 are stored in the auxiliary storage unit 13 in association with each other. Thereafter, the processor 11 returns to a waiting state of ACT31 to ACT37.

In this case, the processor 11 acquires the member code included in the notification data. In addition, this member code is an example of second identification information assigned to a customer. In addition, the processor 11 stores the tracking code as the first identification information and the member code as the second identification information in the auxiliary storage unit 13 as a storage unit. That is, the processor 11 executes information processing based on the sales management application AP1, so that a computer having the processor 11 as a central portion functions as acquisition unit and storage unit.

Incidentally, the process proceeds to ACT14 after the processor 41 in the action monitoring device 4 provides a notification of new detection in ACT13 in FIG. 8.

As ACT14, the processor 41 checks whether a customer located in a detection area exits through an entrance passage and leaves a store without entering a sales floor. In addition, when such an action is not detected, the processor 41 determines NO and the process proceeds to ACT15.

As ACT15, the processor 41 determines whether or not a customer located in the detection area enters the sales floor. In addition, when such an action is not detected, the processor 41 determines NO and the process returns to ACT14.

Thus, the processor 41 waits for the customer to either leave the detection area or enter the sales floor.

A customer may stop shopping for various reasons, such as a case where the customer forgets a member card and thus quickly returns through an entrance passage to leave a store without going on the sales floor. When such an action is detected, the processor 41 determines YES in ACT14 and the process proceeds to ACT16.

As ACT16, the processor 41 notifies the sales management device 1 that the customer has left. The processor 41 transmits notification data including a notification code indicating a notification of leaving and the tracking code determined in ACT12 from the communication interface 44 to the sales management device 1 through the communication network 200. Thereafter, the processor 41 terminates the action monitoring process. When the action monitoring process is terminated, the processor 41 immediately starts a new action monitoring process and prepares for the next customer who will visit the store.

When the notification data is transmitted to the sales management device 1 through the communication network 200 and then received by the communication interface 14, the processor 11 determines YES in ACT33 in FIG. 9 and the process proceeds to ACT40.

As ACT40, the processor 11 updates the transaction management database DB2. That is, the processor 11 deletes the data record DR2 in which the tracking code included in the notification data is set in the field F23 from the transaction management database DB2. Thereafter, the processor 11 returns to a waiting state of ACT31 to ACT37.

Thus, the processor 11 executes information processing based on the sales management application AP1, so that a computer having the processor 11 as a central portion functions as deletion unit.

When a customer located in a detection area enters a sales floor and the processor 41 will determine this action has occurred , the processor 41 thus determines YES in ACT15 in FIG. 8 and the process proceeds to ACT17.

As ACT17, the processor 41 notifies the sales management device 1 that the customer has entered the sales floor. The processor 41 transmits, for example, notification data including a notification code indicating a notification of entrance and the tracking code determined in ACT12 from the communication interface 44 to the sales management device 1 through the communication network 200.

When ACT17 is terminated, the processor 41 continues the subsequent processes and starts a new action monitoring process in parallel with the subsequent processes. Thus, the processor 41 executes an action monitoring process on each of a plurality of customers as tracking targets. One action monitoring process is executed on each customer designated by the tracking code determined in ACT12 as a tracking target, and thus a "customer" referred to in the following description of an action monitoring process indicates a person subjected to tracking.

When the notification data is transmitted to the sales management device 1 through the communication network 200 and received by the communication interface 14, the processor 11 determines YES in ACT34 in FIG. 9 and the process proceeds to ACT41.

As ACT41, the processor 11 determines whether or not there is a member code associated with the tracking code included in the notification data. The processor 11 searches for, for example, a data record DR2 in which a tracking code included in the notification data is set in a field F23 thereof from the transaction management database DB2. In addition, when the data record DR2 is searched for, the processor 11 determines whether or not a member code is set in a field F22 of the data record DR2. In addition, when invalid data is set in the field F22, the processor 11 determines NO and the process proceeds to ACT42.

As ACT42, the processor 11 instructs the check-in device 2 to generate an alarm. The processor 11 transmits, for example, a command indicating an instruction for an alarm from the communication interface 14 to the check-in device 2.

When the command is transmitted to the check-in device 2 through the communication network 200 and received by the communication interface 27, the processor 21 determines YES in ACT52 in FIG. 10 and the process proceeds to ACT54.

As ACT54, the processor 21 starts an alarm operation. The alarm operation is, for example, display by the touch panel 24 of a screen for warning a customer that the customer cannot enter a store because the reading of a member card is not completed. The alarm operation is, for example, an output of a sound message by the sound unit 26 for warning a customer that the customer cannot enter a store because the reading of a member card is not completed. The alarm operation is, for example, an output of a warning sound by the sound unit 26 for giving a notification of an abnormality. The alarm operation may be, for example, turn-on or turn-off of a warning lamp provided separately. The alarm operation may be, for example, a notification to be provided to an information terminal used by an employee in a store such as a store clerk or a security guard. A plurality of different alarm operations may be executed in parallel or in order.

Thus, the processor 21 executes information processing based on the check-in application AP2, so that a computer having the processor 21 as a central portion functions as alarm unit for giving an alarm by using the touch panel 24, the sound unit 26, or the like.

As ACT55, the processor 21 determines whether or not a member code is read by the reader 25. In addition, when it is not determined that a member code is read, the processor 21 determines NO and the process proceeds to ACT56.

As ACT56, the processor 21 determines whether or not a cancellation operation is performed. In addition, when it is not determined that a cancellation operation is performed, the processor 21 determines NO and the process returns to ACT55.

Thus, the processor 21 waits for the reading of a member code or the execution of a cancellation operation as ACT55 and ACT56.

When a customer causes the reader 25 of the check-in device 2 to read a member code recorded on a member card in accordance with an alarm operation, the processor 21 determines YES in ACT55 and the process proceeds to ACT57.

As ACT57, the processor 21 stops the alarm operation.

As ACT58, the processor 21 generate a notification of a member code similar to ACT53. Thereafter, the processor 21 returns to a waiting state of ACT51 and ACT52.

When a customer cannot cause the reader 25 of the check-in device 2 to read a member code recorded on a member card, or the like, an employee prompts the customer to leave a store. In addition, the employee performs a predetermined cancellation operation by the touch panel 24. When the cancellation operation is performed in this manner, the processor 21 determines YES in ACT56 and the process proceeds to ACT59.

As ACT59, the processor 21 stops the alarm operation. Thereafter, the processor 21 returns to a waiting state of ACT51 and ACT52.

When the processor 11 confirms in ACT41 that a member code is set, the processor determines YES. Then, the processor passes ACT42 and returns to a waiting state of ACT31 to ACT37. Thereby, a customer who correctly terminates the reading of a member code is allowed to enter a sales floor.

The customer who enters the sales floor picks up a commodity to be purchased from a display shelf or the like while looking around commodities displayed in the sales floor. In addition, the customer once picks up a commodity but cancels the purchase of the commodity to return the commodity on a display shelf, or the like.

When the processor 41 terminates the notification by the action monitoring device 4 in ACT17 in FIG. 8, the process proceeds to ACT18.

As the ACT18, the processor 41 determines whether or not a customer's action of picking up a commodity is detected. In addition, when the action is not detected, the processor 41 determines NO and the process proceeds to ACT19.

As ACT19, the processor 41 determines whether or not a customer's action of returning a commodity is detected. In addition, when the action is not detected, the processor 41 determines NO and the process proceeds to ACT20.

As ACT20, the processor 41 determines whether or not a customer leaves a store. In addition, when it is not determined that the customer leaves the store, the processor 41 determines NO and the process returns to ACT18.

Thus, as ACT18 to ACT20, the processor 41 picks up a commodity, returns the commodity, or waits for the customer to leave the store.

When a customer's action of picking up a commodity is detected, the processor 41 determines YES in ACT18 and the process proceeds to ACT21.

As ACT21, the processor 41 notifies the sales management device 1 that the commodity is picked up. The processor 41 transmits notification data for giving a notification of the pick-up from the communication interface 44 to the sales management device 1 through the communication network 200. The processor 41 includes, for example, a notification code representing a notification of the pick-up and the tracking code determined in ACT12 in the notification data. In addition, the processor 41 includes, for example, a commodity code for identifying the picked-up commodity and the number of commodity codes in the notification data. Thereafter, the processor 41 returns to a waiting state of ACT18 to ACT20.

When a customer's action of returning a commodity is detected, the processor 41 determines YES in ACT19 and the process proceeds to ACT22.

As ACT22, the processor 41 notifies the sales management device 1 of the return. The processor 41 transmits notification data for giving a notification of the return from the communication interface 44 to the sales management device 1 through the communication network 200. The processor 41 includes, for example, a notification code representing a notification of the return and the tracking code determined in ACT12 in the notification data. In addition, the processor 41 includes, for example, a commodity code for identifying the returned commodity and the number of commodity codes in the notification data. Thereafter, the processor 41 returns to a waiting state of ACT18 to ACT20.

When the notification data indicating the pick-up is transmitted to the sales management device 1 through the communication network 200 and received by the communication interface 14, the processor 11 determines YES in ACT35 in FIG. 9 and the process proceeds to ACT43.

As ACT43, the processor 11 updates the purchased commodity database DB3. That is, the processor 11 searches for a data record DR2 in which a tracking code included in the notification data indicating the pick-up is set in a field F23 from the transaction management database DB2 to acquire a transaction code which is set in a field F21 of the data record DR2. When a data record DR3 in which the acquired transaction code mentioned above is set in a field F31 is not included in the purchased commodity database DB3, the processor 11 adds a new data record DR3 to the purchased commodity database DB3. The processor 11 sets the acquired transaction code mentioned above in a field F31 of the added data record DR3. The processor 11 includes a commodity code included in the notification data indicating the pick-up and the number of commodity codes in a field F32 of the added data record DR3, and sets commodity data including a cancellation flag indicating a non-cancellation state. On the other hand, when a data record DR3 in which the acquired transaction code mentioned above is set in a field F31 thereof is included in the purchased commodity database DB3, the processor 11 adds new commodity data to the data record. That is, the processor 11 includes a commodity code included in the notification data indicating the pick-up and the number of commodity codes in a field subsequent to a field in which commodity data is already set, and sets commodity data including a cancellation flag indicating a non-cancellation state. Thereafter, the processor 11 returns to a waiting state of ACT31 to ACT37.

When the notification data indicating the return is transmitted to the sales management device 1 through the communication network 200 and received by the communication interface 14, the processor 11 determines YES in ACT36 and the process proceeds to ACT44.

As ACT44, the processor 11 updates the purchased commodity database DB3. That is, the processor 11 searches for a data record DR2 in which a tracking code included in the notification data indicating the return is set in a field F23 thereof from the transaction management database DB2, and acquires a transaction code which is set in a field F21 of the data record DR2. The processor 11 searches for a data record DR3 in which the acquired transaction code mentioned above is set in a field F31 thereof from the purchased commodity database DB3. In addition, the processor 11 searches for commodity data including a commodity code included in the notification data indicating the return from the data record DR3, and rewrites the number of commodity codes included in the commodity data to a number obtained by subtracting the number included in the notification data indicating the return. When the number after rewritten is "0", the processor 11 changes the cancellation flag to a canceled state. Thereafter, the processor 11 returns to a waiting state of ACT31 to ACT37.

When a customer terminates the pick-up of all commodities desired to be purchased, the customer leaves a store with the commodities.

When the processor 41 determines that the customer leaves the store, the processor determines YES in ACT20 in FIG. 8 and the process proceeds to ACT23.

As ACT23, the processor 41 notifies the sales management device 1 that the customer leaves the store. The processor 41 transmits notification data for notifying the sales management device 1 that the customer leaves the store from the communication interface 44 to the sales management device 1 through the communication network 200. The processor 41 includes, for example, a notification code representing a notification of the customer leaving the store and the tracking code determined in ACT12 in the notification data. Thereafter, the processor 41 terminates the action monitoring process. When the processor 41 terminates the action monitoring process, the processor immediately starts a new action monitoring process and prepares for the next customer who will visit the store.

As described above, the processor 41 tracks a customer associated with a tracking code through an action monitoring process. That is, the processor 41 executes information processing based on the action monitoring application AP3, so that a computer having the processor 41 as a central portion functions as tracking unit.

When the notification data indicating that the customer has left the store is transmitted to the sales management device 1 through the communication network 200 and received by the communication interface 14, the processor 11 determines YES in ACT37 in FIG. 9 and the process proceeds to ACT45.

As ACT45, the processor 11 performs a store leaving process. First, the processor 11 settles the price of a commodity which is taken away by a customer who leaves a store, that is, a purchased commodity. That is, the processor 11 searches for a data record DR2 in which a tracking code included in the notification data indicating that the customer left the store is set in a field F23 thereof, and acquires a transaction code and a member code which are set in a field F21 of the data record DR2. The processor 11 searches for a data record DR3 in which the acquired transaction code is set in a field F31 thereof from the purchased commodity database DB3. The processor 11 calculates the prices of the purchased commodity on the basis of commodity data included in the data record DR3. The processor 11 searches for a data record DR1 in which the acquired member code is set in a field F11 thereof from the member database DB1. The processor 11 performs a process for settling the calculated prices by using payment information which is set in a field F13 of the data record DR1. For example, the processor 11 requests a settlement server or the like to settle the calculated price by using a credit card number or the like as payment information. When the settlement is completed, the processor 11 deletes a data record DR2 in which a tracking code included in the notification data indicating that the customer left the store is set in a field F23 thereof from the transaction management database DB2. In addition, the processor 11 deletes a data record DR3 in which the acquired transaction code is set in a field F31 thereof from the purchased commodity database DB3. The processor 11 may perform a process of transmitting transaction data and journal data to a POS server, or the like, as a store leaving process. In addition, the processor 11 may perform a process of transmitting electronic receipt data to an electronic receipt server or the like as a store leaving process. Thereafter, the processor 11 returns to a waiting state of ACT31 to ACT37.

As described above, according to the store management system 100, the action monitoring device 4 stores a tracking code for tracking each customer and a member code for identifying the customer in the auxiliary storage unit 13 in association with each other and manages/tracks the stored codes. For this reason, it is possible to properly monitor the customers who are in a store.

In addition, according to the store management system 100, if a customer being tracked using a tracking code not presently associated with a member code attempts to enter a sales floor, an alarm is generated. Thereby, it is possible to prevent such a customer from entering the sales floor without check-in processing. Further, the store management system 100 in the example prevents entrance using an alarm without using an open and close gate. For this reason, it is possible to reduce costs related to the introduction of the store management system 100 as compared with a case where an open and close gate must be provided.

This embodiment can be modified in various ways as follows.

A tracking code and a member code are indirectly associated with each other using management data for managing associations. In this case, the tracking code and the member code may be stored in separate storage devices.

When a member code is read by the check-in device 2, an authentication process for confirming the validity of the member code may be performed so that only a valid member code may be associated with a tracking code. Any existing technique can be used for the authentication process.

The function of the sales management device 1 and the function of the action monitoring device 4 may be performed by a single information processing device.

Multiple entrance passages and detection areas can be provided, and a check-in device 2 may be provided for each. In this case, a member code read by the check-in device 2 is associated with a tracking code of a customer detected in a detection area of the particular entrance passage in which the check-in device 2 is provided.

Some or all of the functions performed by the processors 11, 21, and 41 through information processing can also or instead be performed by hardware for executing information processing which is not based on a program such as a dedicated logic circuit. In addition, each of the above-described functions can also be performed by combining software control with hardware such as the above-described dedicated logic circuit.

While certain embodiments have been described, these embodiments have been presented by way of example only, and are not intended to limit the scope of the inventions. Indeed, the novel embodiment described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An in-store customer tracking system, comprising:
a sensor system (3) including one or more cameras in a store;
a check-in device (2) including a code reader (25) at an entrance region of the store;
a processing system (11) configured to:
upon the sensor system detecting a customer entering the entrance region, assign a customer tracking code and generate a transaction data record in association with the assigned customer tracking code;
upon the code reader reading a customer code while the sensor system detects the customer using the code reader, update the transaction data record to be associated with the read customer code; and
upon the sensor system detecting the customer leaving the store, delete the transaction data record.

2. The in-store customer tracking system according to claim 1, wherein the processing system is further configured to cause the check-in device to perform a warning operation when the sensor system detects the customer has passed the entrance region without the assigned transaction data record for the customer being associated with a customer code.

3. The in-store customer tracking system according to claim 2, wherein
the check-in device includes a display, and
the warning operation includes displaying a warning message on the display.

4. The in-store customer tracking system according to claim 2 or 3, wherein
the check-in device includes a speaker, and
the warning operation includes generating a warning sound from the speaker the display.

5. The in-store customer tracking system according to any one of claims 2 to 4, wherein the check-in device is further configured to stop the warning operation if the code reader reads a customer code for the customer.

6. The in-store customer tracking system according to any one of claims 1 to 5, wherein the processing system is further configured to assign a transaction code and associate the transaction data record also with the assigned transaction code, upon the sensor system detecting the customer entering the entrance region.

7. The in-store customer tracking system according to claim 6, wherein the processing system is further configured to generate a purchase product data record in association with the transaction code and a product code, upon the sensor system detecting the customer taking a product identified by the product code.

8. The in-store customer tracking system according to claim 7, wherein the processing system is further configured to:
maintain a customer data record including payment information in association with the customer code; and
upon the sensor system detecting the customer leaving the store, obtain the payment information from the customer data record using the transaction code included in the transaction data record, and process payment for the product identified by the product code in the purchase product data record using the payment information.

9. The in-store customer tracking system according to claim 8, wherein the processing system is further configured to delete the purchase product data record upon completing processing of the payment.

10. The in-store customer tracking system according to claim 8 or 9, wherein the processing system is further configured to generate electronic receipt data for the payment upon completing processing of the payment.

11. A method for tracking a customer, the method comprising:
detecting a customer entering an entrance region of a store with a sensor system;
upon detecting the customer entering the entrance region, assigning a customer tracking code and generating a transaction data record in association with the assigned customer tracking code;
detecting the customer using a code reader of a check-in device in the entrance region with the sensor system;
updating the transaction data record to be associated with the read customer code; and
deleting the transaction data record after the sensor system detects the customer has left the store.

12. The method according to claim 11, further comprising:
causing the check-in device to perform a warning operation when the sensor system detects the customer passes the entrance region without the transaction data record being associated with a customer code.

13. The method according to claim 12, wherein the warning operation includes displaying a warning message on a display of the check-in device.

14. The method according to claim 12 or 13, wherein the warning operation includes generating a warning sound from a speaker of the check-in device.

15. The method according to any one of claims 12 to 14, further comprising:
stopping the warning operation if the code reader reads a customer code of the customer.

## Patentansprüche

1. Ladeninternes Kundenverfolgungssystem, umfassend:
ein Sensorsystem (3), das eine oder mehrere Kameras in einem Geschäft beinhaltet;
eine Abfertigungsvorrichtung (2), die ein Codelesegerät (25) in einem Eingangsbereich des Geschäfts beinhaltet;
ein Verarbeitungssystem (11), das zu Folgendem konfiguriert ist:
wenn das Sensorsystem einen Kunden erkennt, der den Eingangsbereich betritt, Zuweisen eines Kundenverfolgungscodes und Erzeugen eines Transaktionsdatensatzes in Assoziation mit dem zugewiesenen Kundenverfolgungscode;
wenn das Codelesegerät einen Kundencode liest, während das Sensorsystem den Kunden unter Verwendung des Codelesegeräts erfasst, Aktualisieren des Transaktionsdatensatzes, um ihn mit dem gelesenen Kundencode zu assoziieren; und
wenn das Sensorsystem erfasst, dass der Kunde das Geschäft verlässt, Löschen des Transaktionsdatensatzes.

2. Ladeninternes Kundenverfolgungssystem nach Anspruch 1, wobei das Verarbeitungssystem ferner konfiguriert ist, um die Abfertigungsvorrichtung zu veranlassen, einen Warnvorgang durchzuführen, wenn das Sensorsystem erfasst, dass der Kunde den Eingangsbereich passiert hat, ohne dass der zugewiesene Transaktionsdatensatz für den Kunden mit einem Kundencode assoziiert wird.

3. Ladeninternes Kundenverfolgungssystem nach Anspruch 2, wobei
die Abfertigungsvorrichtung eine Anzeige beinhaltet, und
der Warnvorgang ein Anzeigen einer Warnmeldung auf der Anzeige beinhaltet.

4. Ladeninternes Kundenverfolgungssystem nach Anspruch 2 oder 3, wobei
die Abfertigungsvorrichtung einen Lautsprecher beinhaltet, und
der Warnvorgang ein Erzeugen eines Warntons aus dem Lautsprecher der Anzeige beinhaltet.

5. Ladeninternes Kundenverfolgungssystem nach einem der Ansprüche 2 bis 4, wobei die Abfertigungsvorrichtung ferner konfiguriert ist, um den Warnvorgang anzuhalten, wenn das Codelesegerät einen Kundencode für den Kunden liest.

6. Ladeninternes Kundenverfolgungssystem nach einem der Ansprüche 1 bis 5, wobei das Verarbeitungssystem ferner konfiguriert ist, um einen Transaktionscode zuzuweisen und den Transaktionsdatensatz auch mit dem zugewiesenen Transaktionscode zu assoziieren, wenn das Sensorsystem erfasst, dass der Kunde den Eingangsbereich betritt.

7. Ladeninternes Kundenverfolgungssystem nach Anspruch 6, wobei das Verarbeitungssystem ferner konfiguriert ist, um einen Kaufproduktdatensatz in Assoziation mit dem Transaktionscode und einem Produktcode zu erzeugen, wenn das Sensorsystem erfasst, dass der Kunde ein durch den Produktcode identifiziertes Produkt nimmt.

8. Ladeninternes Kundenverfolgungssystem nach Anspruch 7, wobei das Verarbeitungssystem ferner zu Folgendem konfiguriert ist:
Führen einen Kundendatensatz einschließlich Zahlungsinformationen in Assoziation mit dem Kundencode; und
wenn das Sensorsystem erfasst, dass der Kunde das Geschäft verlässt, Erlangen der Zahlungsinformationen aus dem Kundendatensatz unter Verwendung des Transaktionscodes, der in dem Transaktionsdatensatz beinhaltet ist, und Verarbeiten einer Zahlung für das Produkt, das durch den Produktcode in dem Kaufproduktdatensatz identifiziert ist, unter Verwendung der Zahlungsinformationen.

9. Ladeninternes Kundenverfolgungssystem nach Anspruch 8, wobei das Verarbeitungssystem ferner konfiguriert ist, um den Kaufproduktdatensatz nach Abschluss eines Verarbeitens der Zahlung zu löschen.

10. Ladeninternes Kundenverfolgungssystem nach Anspruch 8 oder 9, wobei das Verarbeitungssystem ferner konfiguriert ist, um nach Abschluss eines Verarbeitens der Zahlung elektronische Belegdaten für die Zahlung zu erzeugen.

11. Kundenverfolgungsverfahren, das Verfahren umfassend:
Erfassen eines Kunden, der einen Eingangsbereich eines Geschäfts betritt, mit einem Sensorsystem;
bei Erfassen des Kunden, der den Eingangsbereich betritt, Zuweisen eines Kundenverfolgungscodes und Erzeugen eines Transaktionsdatensatzes in Assoziation mit dem zugewiesenen Kundenverfolgungscode;
Erfassen des Kunden unter Verwendung eines Codelesegeräts einer Abfertigungsvorrichtung in dem Eingangsbereich mit dem Sensorsystem;
Aktualisieren des Transaktionsdatensatzes, um ihn mit dem gelesenen Kundencode zu assoziieren; und
Löschen des Transaktionsdatensatzes, nachdem das Sensorsystem erfasst hat, dass der Kunde das Geschäft verlassen hat.

12. Verfahren nach Anspruch 11, ferner umfassend:
bewirken, dass die Abfertigungsvorrichtung einen Warnvorgang durchführt, wenn das Sensorsystem erfasst, dass der Kunde den Eingangsbereich passiert, ohne dass der Transaktionsdatensatz mit einem Kundencode assoziiert wird.

13. Verfahren nach Anspruch 12, wobei der Warnvorgang ein Anzeigen einer Warnmeldung auf einer Anzeige der Abfertigungsvorrichtung beinhaltet.

14. Verfahren nach Anspruch 12 oder 13, wobei der Warnvorgang ein Erzeugen eines Warntons aus einem Lautsprecher der Abfertigungsvorrichtung umfasst.

15. Verfahren nach einem der Ansprüche 12 bis 14, ferner umfassend:
Anhalten des Warnvorgangs, wenn das Codelesegerät einen Kundencode des Kunden liest.

## Revendications

1. Système de suivi de clients en magasin, comprenant :
un système de détection (3) comprenant une ou plusieurs caméras dans un magasin ;
un dispositif de vérification (2) comprenant un lecteur de code (25) situé au niveau d'une zone d'entrée du magasin ;
un système de traitement (11) configuré pour :
lorsque le système de détection détecte un client entrant dans la zone d'entrée, attribuer un code de suivi de client et générer un enregistrement de données de transaction en association avec le code de suivi de client attribué ;
lorsque le lecteur de code lit un code client tandis que le système de détection détecte le client à l'aide du lecteur de code, mettre à jour l'enregistrement de données de transaction afin qu'il soit associé au code client lu ; et
lorsque le système de détection détecte que le client quitte le magasin, supprimer l'enregistrement de données de transaction.

2. Système de suivi de clients en magasin selon la revendication 1, dans lequel le système de traitement est en outre configuré pour amener le dispositif de vérification à effectuer une opération d'avertissement lorsque le système de détection détecte que le client a franchi la zone d'entrée sans que l'enregistrement de données de transaction attribué pour le client soit associé à un code client.

3. Système de suivi de clients en magasin selon la revendication 2, dans lequel
le dispositif de vérification comprend un écran, et
l'opération d'avertissement comprend l'affichage d'un message d'avertissement sur l'écran.

4. Système de suivi de clients en magasin selon la revendication 2 ou 3, dans lequel
le dispositif de vérification comprend un haut-parleur, et
l'opération d'avertissement comprend la génération d'un son d'avertissement à partir du haut-parleur du dispositif de vérification.

5. Système de suivi de clients en magasin selon l'une quelconque des revendications 2 à 4, dans lequel le dispositif de vérification est en outre configuré pour arrêter l'opération d'avertissement si le lecteur de code lit un code client pour le client.

6. Système de suivi de clients en magasin selon l'une quelconque des revendications 1 à 5, dans lequel le système de traitement est en outre configuré pour attribuer un code de transaction et associer l'enregistrement de données de transaction également au code de transaction attribué, lorsque le système de détection détecte que le client entre dans la zone d'entrée.

7. Système de suivi de clients en magasin selon la revendication 6, dans lequel le système de traitement est en outre configuré pour générer un enregistrement de données de produit d'achat en association avec le code de transaction et un code produit, lorsque le système de détection détecte que le client prend un produit identifié par le code produit.

8. Système de suivi de clients en magasin selon la revendication 7, dans lequel le système de traitement est en outre configuré pour :
conserver un enregistrement de données client comprenant des informations de paiement en association avec le code client ; et
lorsque le système de détection détecte que le client quitte le magasin, obtenir les informations de paiement à partir de l'enregistrement de données client en utilisant le code de transaction inclus dans l'enregistrement de données de transaction, et traiter le paiement du produit identifié par le code produit dans l'enregistrement de données de produit d'achat en utilisant les informations de paiement.

9. Système de suivi de clients en magasin selon la revendication 8, dans lequel le système de traitement est en outre configuré pour supprimer l'enregistrement de données de produit d'achat une fois le traitement du paiement terminé.

10. Système de suivi de clients en magasin selon la revendication 8 ou 9, dans lequel le système de traitement est en outre configuré pour générer des données de reçu électronique pour le paiement une fois le traitement du paiement terminé.

11. Procédé de suivi d'un client, le procédé comprenant le fait de :
détecter un client entrant dans une zone d'entrée d'un magasin, à l'aide d'un système de détection ;
après avoir détecté le client entrant dans la zone d'entrée, attribuer un code de suivi de client et générer un enregistrement de données de transaction en association avec le code de suivi de client attribué ;
détecter le client à l'aide d'un lecteur de code d'un dispositif de vérification dans la zone d'entrée avec le système de détection ;
mettre à jour l'enregistrement de données de transaction afin qu'il soit associé au code client lu ; et
supprimer l'enregistrement de données de transaction après que le système de détection a détecté que le client a quitté le magasin.

12. Procédé selon la revendication 11, comprenant en outre le fait de :
provoquer l'exécution d'une opération d'avertissement par le dispositif de vérification lorsque le système de détection détecte que le client franchit la zone d'entrée sans que l'enregistrement de données de transaction soit associé à un code client.

13. Procédé selon la revendication 12, dans lequel l'opération d'avertissement comprend l'affichage d'un message d'avertissement sur un écran du dispositif de vérification.

14. Procédé selon la revendication 12 ou 13, dans lequel l'opération d'avertissement comprend la génération d'un son d'avertissement à partir d'un haut-parleur du dispositif de vérification.

15. Procédé selon l'une quelconque des revendications 12 à 14, comprenant en outre le fait de :
arrêter l'opération d'avertissement si le lecteur de code lit un code client du client.
